# EUROPEAN PATENT SPECIFICATION

(11) **EP 3 294 482 B1**
(45) Date of publication and mention of the grant of the patent: **16.12.2020**
(21) Application number: 16714124.1
(22) Date of filing: 16.03.2016
(51) Int. Cl.: B22F 1/00, B22F 9/08, C22C 1/04, C22C 14/00, C22C 16/00, C22C 19/03, C22C 21/00, C22C 27/02, C22C 27/04

(54) **METHODS AND APPARATUSES FOR PRODUCING METALLIC POWDER MATERIAL**
VERFAHREN UND VORRICHTUNGEN ZUR HERSTELLUNG VON METALLISCHEM PULVERMATERIAL
PROCÉDÉS ET APPAREILS POUR LA PRODUCTION DE MATÉRIAU MÉTALLIQUE EN POUDRE

(30) Priority: 14.05.2015 US 201514712103
(43) Date of publication of application: 21.03.2018
(73) Proprietor: ATI Properties LLC, Albany, OR 97321 (US)
(72) Inventor: FORBES JONES, Robin, M., Charlotte, NC 28277 (US); ARNOLD, Matthew, J., Charlotte, NC 28277 (US); MINISANDRAM, Ramesh, S., Charlotte, NC 28270 (US); KRACKE, Arthur, A., Charlotte, NC 28270 (US)
(74) Representative: Schweizer, Christiane
(86) International application number: PCT/US2016/022544
(87) International publication number: WO 2016/182631

(56) References cited:
- EP-A2- 0 427 379
- EP-A2- 0 427 379
- WO-A1-2016/085658
- US-A- 5 272 718
- US-A- 5 366 204
- US-A- 5 516 081
- US-A- 5 516 081
- US-A- 5 769 151
- US-A1- 2007 057 416
- US-A1- 2007 057 416
- US-B1- 6 358 466

## Description

### FIELD OF TECHNOLOGY

The present invention relates to methods and apparatuses for producing a metallic powder material. In particular, aspects of the present invention relate to methods of producing a metallic powder material using an apparatus including a melting hearth adapted to receive feed material, and an atomizing hearth disposed to receive at least a portion of molten material from the melting hearth. In the present invention, the method includes passing at least a portion of molten material from the atomizing hearth in a molten state to an atomizing apparatus, which includes an invention atomizing nozzle. The present invention is also directed to a metallic powder material and articles produced by the methods and apparatuses of the present invention.

### DESCRIPTION OF THE BACKGROUND OF THE TECHNOLOGY

Gas atomization and hot isostatic pressing (also referred to as "HIPing") are conventionally used for forming a metallic article from metallic powder material. In these processes, a melt having the desired chemical composition is prepared, and the molten composition is passed through an atomizing apparatus in which gas jets disperse the molten composition into droplets that are quenched. The quenched droplets form loose powder. The metallic powder material can be hot isostatically pressed to form a metallic article.

Another conventional method for producing a metallic article is nucleated casting. Nucleated casting utilizes gas atomization to produce a spray of semi-liquid droplets that are deposited into a mold. It is commonly seen that some portion of the droplet spray, i.e., the overspray, may accumulate on a top surface of the mold. Similar in respects to nucleated casting, spray forming is a conventional technique in which a metallic article is formed from a semi-liquid droplet spray, but without using a mold.

In conventional nucleated casting, spray forming, and the gas atomizing/HIPing sequence, solidified materials that have been previously melted to the desired chemical composition are re-melted to present molten material to the atomizing apparatus. In one example, solidified material having the desired chemical composition is thermomechanically worked to a wire and is subsequently re-melted for atomization. In another example, a cold-wall induction furnace is used to melt and homogenize the previously solidified material before the atomization process. When material is solidified prior to re-melting and atomization, the material can be contaminated, such as during thermomechanical working and handling. The contaminants in the solid material can become entrained in the molten metal stream presented to the atomizing apparatus. Re-melting solidified material for atomization also can limit the ability to control process parameters such as molten metal superheat and flow rate, which may need to be controlled to ensure consistent atomization. In addition, using solidified material for re-melting and atomization can increase costs associated with the manufacture of the atomized metal powder.

Patent specification EP 0427379 refers to a method for producing titanium particles suitable for powder metallurgy applications.

Prior art US patent application US 2007057416 refers to methods and apparatus for conveying molten materials and/or atomizing molten materials using the specific nozzle assemblies.

Prior art document US 5516081 refers to an apparatus for producing a molten metal flow comprises a refining hearth having a water-cooled wall, and an entry flow channel through the wall of the hearth disposed tangentially to the wall such that a flow of molten metal introduced into the hearth through the entry flow channel flows tangentially to the wall of the hearth.

Prior art document US 5366204 refers to a method for improved atomization of molten metal having a melting point above 1000 °C. This atomization is carried out in close coupled atomizer. Prior art document US 2769151 refers to methods for controlling the superheat of the stream of molten metal from an electroslag refining apparatus, wherein these methods include the introduction of unrefined metal into an electroslag refining process apparatus in which the unrefined metal is first melted at the upper surface of the refining slag.

Prior art document US 6358466 refers to a tubular thermal sprayed melt containment component for transient containment of molten metal or alloy, wherein the tubular member includes a thermal sprayed inner melt-contacting layer for contacting molten metal or alloy to be processed, a thermal sprayed heat-generating layer deposited on the inner layer, and an optional thermal sprayed outer thermal insulating layer.

Prior art document US 5272718 refers to a method and apparatus for forming a stream of molten material, wherein the apparatus includes a melt container having a bottom wall in which is formed an aperture.

### SUMMARY

The present invention is directed to methods and apparatuses that address certain limitations of conventional approaches for producing a metallic powder material. One aspect of the present invention is directed to a method of producing a metallic powder material, the method comprising: supplying feed materials to a melting hearth; melting the feed materials in the melting hearth with a first heat source, thereby producing a molten material having a desired composition; passing at least a portion of the molten material to an atomizing hearth; heating the molten material in the atomizing hearth with a second heat source; passing at least a portion of the molten material from the atomizing hearth in a molten state directly or indirectly to an atomizing apparatus; and forming a droplet spray of the molten material with the atomizing apparatus. At least a portion of the droplet spray is solidified to provide a metallic powder material. In the method of the present invention, at least a portion of the molten material passes to the atomizing apparatus continually. In the method of the present invention, the molten material passes from the melting hearth to the atomizing hearth through at least one additional hearth. In the present invention, the method of producing a metallic powder material is characterized in independent claim 1, while an apparatus for producing a metallic powder of the present invention is characterized in independent claim 12.

Another aspect of the present invention is directed to an apparatus for producing a metallic powder material. The apparatus comprises: a melting hearth adapted to receive feed materials; a first heat source adapted to melt the feed materials in the melting hearth and produce a molten material having a desired composition; an atomizing hearth disposed to directly or indirectly receive at least a portion of the molten material from the melting hearth; a second heat source adapted to heat molten material in the atomizing hearth; an atomizing apparatus adapted to form a droplet spray of the molten material; a transfer unit coupled to the atomizing hearth and the atomizing apparatus; and a collector adapted to receive the droplet spray from the atomizing apparatus. The transfer unit is adapted to pass molten material from the atomizing hearth to the atomizing apparatus in a molten state.

### BRIEF DESCRIPTION OF THE DRAWING

Features and advantages of the methods and alloy articles described herein may be better understood by reference to the accompanying drawings in which:
Figure 1 is a flow chart of a non-limiting embodiment of a method of producing a metallic powder material according to the present invention;
Figure 2 is a schematic cross-sectional side view illustrating a embodiment of an apparatus for producing a metallic powder material according to the present invention;
Figure 3 is a schematic plan view of the apparatus of Figure 1;
Figure 4 is a schematic plan view of another embodiment of an apparatus for producing a metallic powder material according to the present invention;
Figure 5 is an enlarged partial cross-sectional side view of the apparatus of Figure 1; and
Figure 6 is a schematic cross-sectional side view illustrating another embodiment of an apparatus for producing a metallic powder material according to the present invention.

It should be understood that the disclosure is not limited in its application to the embodiments illustrated in the above-described drawings. The reader will appreciate the foregoing details, as well as others, upon considering the following detailed description of certain embodiments of methods and apparatuses according to the present invention. The reader also may comprehend certain of such additional details upon using the methods and apparatuses described herein.

### DETAILED DESCRIPTION OF CERTAIN NON-LIMITING EMBODIMENTS

In the present description of embodiments and in the claims, other than in the operating examples or where otherwise indicated, all numbers expressing quantities or characteristics of ingredients and products, processing conditions, and the like are to be understood as being modified in all instances by the term "about." Accordingly, unless indicated to the contrary, any numerical parameters set forth in the following description and the attached claims are approximations that may vary depending upon the desired characteristics one seeks to obtain in the methods and apparatuses according to the present invention. At the very least each numerical parameter should be construed in light of the number of reported significant digits and by applying ordinary rounding techniques.

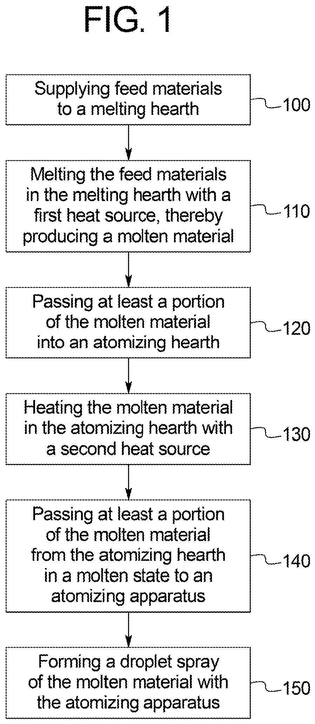

The present invention, is directed to methods and apparatuses that address certain of the limitations of conventional approaches for producing a metallic powder material. Referring to Figure 1, a embodiment of a method of producing a metallic powder material is illustrated. The method includes: supplying feed materials to a melting hearth (block 100); melting the feed materials in the melting hearth with a first heat source, thereby producing a molten material (block 110) having a desired chemical composition; passing at least a portion of the molten material directly or indirectly to an atomizing hearth (block 120); heating the molten material in the atomizing hearth with a second heat source (block 130); passing at least a portion of the molten material from the atomizing hearth in a molten state to an atomizing apparatus (block 140); and forming a droplet spray of the molten material with the atomizing apparatus (block 150). At least a portion of the droplet spray is solidified to provide a metallic powder material having the desired composition.

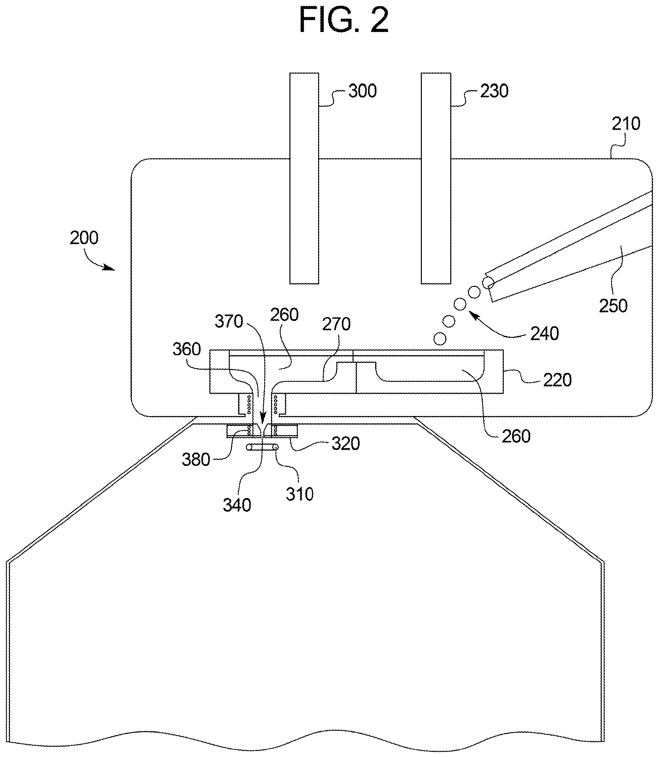

Referring to Figures 2-3, the illustrated embodiment of the apparatus 200 for producing a metallic powder material comprises a melt chamber 210, and a melting hearth 220 and a first heat source 230 positioned in the melt chamber 210. The melt chamber 210 is configured to maintain an atmosphere therein. The atmosphere may have a pressure that is below atmospheric pressure, exceeds atmospheric pressure, or is at atmospheric pressure. According to certain embodiments, the gas atmosphere in the melt chamber 210 may be chemically inert relative to the material being heated in the melt chamber 210. According to certain embodiments, the gas atmosphere within the melt chamber 210 may be helium, argon, a blend of helium and argon, or another inert gas or gas mixture. According to other embodiments, other gases or blends of gases are within the atmosphere in melt chamber 210, provided the gases or gas blends do not unacceptably contaminate the molten material within the melt chamber 210.

The melting hearth 220 is adapted to receive feed materials 240. According to certain embodiments , the feed materials 240 are virgin raw materials. According to other embodiments, the feed materials 240 include or consist of scrap materials, revert, recycled materials, and/or master alloys. According to certain embodiments, the feed materials 240 include particulate materials. According to other embodiments, the feed materials 240 include or consist of materials in the form of a fabricated or previously melted electrode such as, for example, previously melted materials in the shape of a cylinder or a rectangular prism. In any case, in the method according to the present invention, the chemical composition of the molten material produced in the melting hearth 220 is adjusted to the desired composition by the selective addition of feed materials to the melting hearth 210.

According to certain embodiments, the feed materials 240 predominantly comprise titanium materials. According to certain non-limiting embodiments, the feed materials 240 are selected to provide a molten material having the chemical composition of one of a commercially pure titanium, a titanium alloy (e.g., Ti-6AI-4V alloy, having a composition specified in UNS R56400), and a titanium aluminide alloy (e.g., Ti-48AI-2Nb-2Cr alloy). According to another embodiment, the feed materials 240 are selected to provide a molten material comprising, by weight, about 4 percent vanadium, about 6 percent aluminum, and balance titanium and impurities. (All percentages herein are weight percentages, unless otherwise indicated.) According to yet another embodiment, the feed materials 240 are selected to provide a molten material having the chemical composition of one of a commercially pure nickel, a nickel alloy (e.g., Alloy 718, having a composition specified in UNS N07718), a commercially pure zirconium, a zirconium alloy (e.g., Zr 704 alloy, having a composition specified in UNS R60704), a commercially pure niobium, a niobium alloy (e.g., ATI Nb1Zr™ alloy (Type 3 and Type 4), having a composition specified in UNS R04261), a commercially pure tantalum, a tantalum alloy (e.g., Tantalum-10% tungsten alloy, having a composition specified in UNS 20255), a commercially pure tungsten, and a tungsten alloy (e.g., 90-7-3 tungsten alloy). The starting materials may be selected so as to provide a molten composition having the desired chemical composition and other desired properties. The molten materials are atomized in the methods and apparatus herein, thereby providing a metallic powder material having the chemical composition of the molten material that is atomized to the powder.

According to certain embodiments, the feed materials 240 are fed into the melting hearth 220 via a feeding mechanism such as, for example, feed chute 250. According to certain embodiments, the feeding mechanism includes at least one of a vibratory feeder, a chute, and a pusher. In other embodiments, the feeding mechanism includes any other mechanisms that can suitably introduce feed materials 240 onto the melting hearth 220.

According to certain embodiments, the first heat source 230, which is associated with the melting hearth 220, includes at least one heating device selected from a plasma torch, an electron beam generator, another heating device generating electrons, a laser, an electric arc device, and an induction coil. In one example, the first heat source 230 is adapted to melt the feed materials 240 in the melting hearth 220 using a plasma torch, to thereby produce a molten material 260 having a desired chemical composition. The first heat source 230 is adapted and positioned to heat the feed materials in the melting hearth 220 to a temperature at least as great as the melting temperature (liquidus) of the feed materials 240 and to maintain those materials in a molten state in the melting hearth 220. In certain non-limiting embodiments, the first heat source 230 heats the molten material formed in the melting hearth 220 to at least partially refine the molten material. According to certain embodiments, the first heat source 230 may be positioned about 100 mm to about 250 mm above the upper surface of the melting hearth 220. According to other embodiments, the first heat source 230 comprises a first plasma torch that is positioned at a height relative to the top surface of the molten material in the melting hearth 220 so that an edge of the plume of the hot plasma produced by the first plasma torch suitably heats the material. According to certain embodiments, the power level, position relative to the melting hearth 220, and other parameters of the first heat source 230 are selected to heat the molten material 260 in the melting hearth 220 to a temperature range including the liquidus of the material up to about 500°C above the melting point of the material. According to further embodiments, the power level, position, and other parameters of first heat source 230 are optimized to superheat the material in the melting hearth 220 to a temperature range including a temperature about 50°C above the liquidus of the material up to about 300°C above the liquidus of the material. According to other embodiments, the power level, position, and other parameters of the first heat source 230 are optimized to superheat the material to a temperature exceeding the liquidus of the material by any suitable degree, so long as the first heat source 230 does not vaporize the material and/or vary the chemistry of the molten material in an undesired manner.

According to certain embodiments, an atomizing hearth 270 is disposed to receive at least a portion of the molten material 260 directly or indirectly from the melting hearth 220. Once molten and suitably heated, the molten material 260 in the melting hearth 220 may drain from the melting hearth 220 and pass directly or indirectly (e.g., through at least one additional hearth) to the atomizing hearth 270. The atomizing hearth 270 directly or indirectly collects molten material 260 from the atomizing hearth 270, and may hold at least a portion of the molten material 260 as molten material 260 passes from the atomizing hearth 270 and on to the atomizing nozzle of an atomizing apparatus 310, as further explained below. In this regard, the atomizing hearth 270 acts as a "surge buffer" for the molten material 260, regulating the flow of molten material 260 to the atomizing apparatus 310. According to certain embodiments, the atomizing hearth 270 is disposed in the melt chamber 21O with the melting hearth 220. According to other embodiments, the atomizing hearth 270 is not in a single chamber with the melting hearth 220 and, instead, may be located in another chamber, such as an adjoining chamber.

According to various embodiments, at least one additional hearth is disposed intermediate the melting hearth 220 and the atomizing hearth 260, and molten material passes from the melting hearth 260, through the at least one additional hearth, and into the atomizing hearth 270. This arrangement is described herein as involving passage of molten material from the melting hearth indirectly to the atomizing hearth.

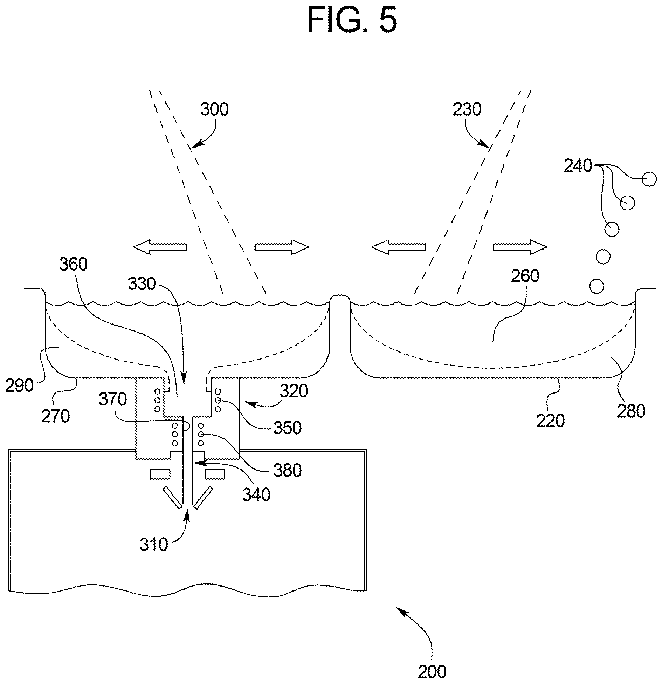

According to certain embodiments, and with reference to Figure 5, both the melting hearth 220 and the atomizing hearth 270 are water-cooled copper hearths. If present, the one or more additional hearths present in various embodiments also may be water-cooled copper hearths. According to other embodiments, at least one of the melting hearth 220, the atomizing hearth 270, and, if present, the one or more additional hearths are constructed of any other suitable materials and components and are cooled or otherwise adapted to prevent melting of the hearth as the materials are heated therein. According to certain embodiments, a portion of the molten material 260 contacts a cooled wall of the melting hearth 220 and may solidify to form a first skull 280 that prevents the remainder of the molten material 260 from contacting the wall of the melting hearth 220, thereby insulating the wall of the melting hearth 220 from the molten material 260. Also, in certain embodiments, a portion of the molten material 260 contacts the cooled wall of the atomizing hearth 270 as the molten material 260 flows into the atomizing hearth 270 from the melting hearth 220, and may solidify on the wall to form a second skull 290 that prevents the remainder of the molten material 260 from contacting the wall of the atomizing hearth 270, thereby insulating the wall of the atomizing hearth 270 from the molten material 260. In certain embodiments, the one or more additional hearths, if present, may operate in a similar manner to prevent undesirable contact of molten materials with the hearth walls.

Depending on the use requirements or preferences for the particular method or apparatus 200, the material on the melting hearth 220, the atomizing hearth 270, and, if present, the one or more additional hearths, may be refined and/or homogenized as it is heated. For example, in refining the molten material, high density solid inclusions and other solid contaminants in the molten material may sink to the bottom of the molten material in the particular hearth and become entrained in the skull on the hearth wall. Some low density solid inclusions or other solid contaminants may float on the surface of the molten material in the particular hearth and be vaporized by the associated heat source. Other low density solid inclusions or other solid contaminants may be neutrally buoyant and suspended slightly below the surface of the molten material, and dissolve in the molten material in the hearth. In this way, the molten material 260 is refined as solid inclusions and other solid contaminants are removed from or dissolve in the molten material 260.

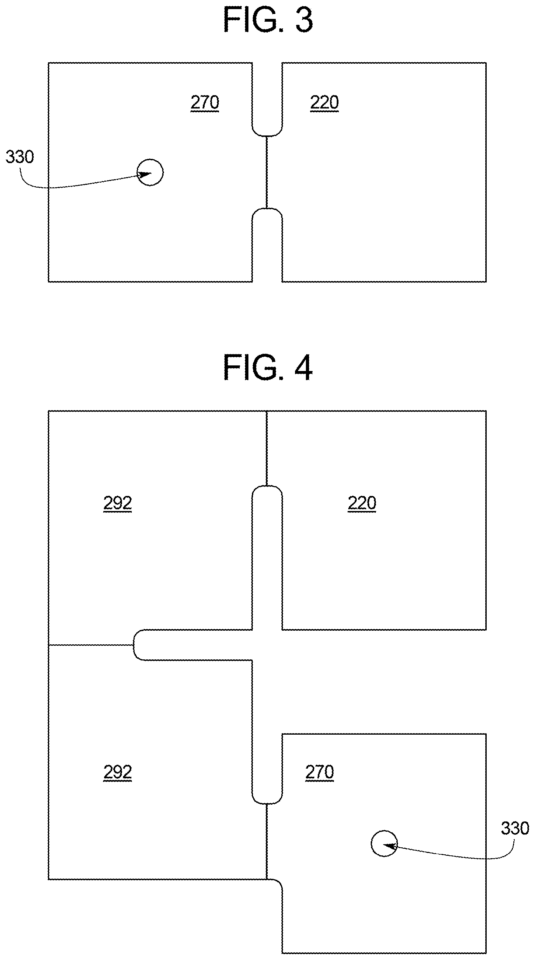

Referring also to Figure 4, according to the illustrated embodiment, at least one additional hearth 292 is positioned between the melting hearth 220 and the atomizing hearth 270. At least a portion of the molten material 260 on the melting hearth 220 passes through the one or more additional hearth(s) 292 before passing into the atomizing hearth 270. In certain embodiments, the additional hearth(s) 292 may be used for at least one of refining and homogenizing the molten material 260. "Refining" and "homogenizing" are terms of art and will be readily understood by those having ordinary skill in the production of metallic powder materials. In general, in connection with hearth components, refining may involve removing, dissolving, or trapping impurities or undesirable constituents from a molten material in a hearth, and preventing the impurities or undesirable constituents from progressing downstream. Homogenizing may involve mixing or blending a molten material such that the material has a more uniform composition. According to certain embodiments, the one or more additional hearth(s) 292 are positioned in series with the melting and atomizing hearths 220, 270 to provide a flow path for the molten material 260 in a generally straight line or in an alternate shape selected from a generally zig-zag shaped path, a generally L-shaped path, and a generally C-shaped path. According to certain embodiments, an additional heat source (not shown) is associated with one or more of the additional hearth(s) 292. According to certain embodiments, the additional heat source includes one or more heating devices selected from a plasma torch, an electron beam generator, another heating device generating electrons, a laser, an electric arc device, and an induction coil.

According to certain embodiments, a second heat source 300 is adapted to heat the molten material 260 in the atomizing hearth 270. According to certain embodiments, the second heat source 300 includes at least one heat source selected from a plasma torch, an electron gun, a heating device that generates electrons, a laser, an electric arc, and an induction coil. The second heat source 300 is positioned to heat the top surface of the molten material in the atomizing hearth 270 to a temperature as least as great as the melting temperature (liquidus) of the material. According to certain embodiments, the second heat source 300 may be positioned about 100 mm to about 250 mm above the atomizing hearth 270. According to certain embodiments, the second heat source 300 comprises a plasma torch that is positioned at a height relative to the top surface of the molten material on the atomizing hearth 270 so that an edge of the plume of the hot plasma suitably heats the material. According to certain embodiments, the power level, position relative to the atomizing hearth 270, and other parameters of the second heat source 300 are selected to superheat the materials on the atomizing hearth 270 to a temperature range of about 50°C above the liquidus of the material to about 400°C above the liquidus of the material. According to further embodiments, the power level, position, and other parameters of second heat source 300 are optimized to superheat the material on the atomizing hearth 270 to a temperature range of about 100°C above the liquidus of the material to about 200°C above the liquidus of the material. According to other embodiments, the power level, position, and other parameters of the second heat source 300 are optimized to superheat the material to a temperature exceeding the liquidus by any suitable degree, so long as the second heat source 300 does not vaporize the material and/or vary the chemistry of the molten material in an undesired manner.

According to certain embodiments, an atomizing apparatus 310 includes an atomizing nozzle adapted to form a droplet spray of the molten material 260, and a transfer unit 320 is upstream of the atomizing apparatus 310. For example, the transfer unit 320 may pass molten material directly to the atomizing nozzle. The transfer unit 320 is coupled to the atomizing hearth 270 and the atomizing apparatus 310. The second heat source 300 is designed to keep molten material 260 that is flowing into the transfer unit 320 in a molten state, and the transfer unit 320 is adapted to pass at least a portion of the molten material 260 from the atomizing hearth 270 to the atomizing apparatus 310 in a molten state. Although only a combination of a single transfer unit and a single atomizing apparatus is included in the illustrated apparatus 200, it is contemplated that embodiments including multiple atomizing apparatuses, such as multiple atomizing nozzles, may be advantageous. For example, process rates may be increased and material production costs may be reduced in an apparatus employing multiple transfer units 320 and one or more atomizing nozzles or other atomizing apparatuses 310 downstream of the atomizing hearth 270.

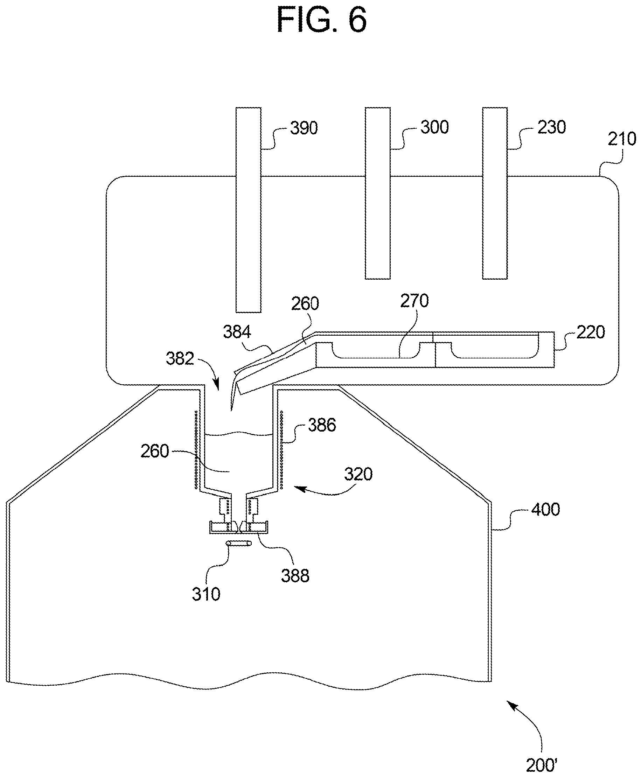

Referring to Figure 5, according to the illustrated embodiment, the transfer unit 320 is a cold induction guide (CIG). Figure 6 illustrates an apparatus 200' according to another embodiment of the present invention. The transfer unit 320 of apparatus 200' includes an induction guide 382 that optionally includes a pouring trough 384 and a segmented induction mold 386 in addition to the CIG 388. In the illustrated embodiment of apparatus 200', an additional heat source 390 is associated with the pouring trough 384 and segmented induction mold 386.

The transfer unit 320 maintains the purity of the molten material 260 produced in the melting hearth 220 and passing from the atomizing hearth 270 to the atomizing apparatus 310 by protecting the molten material 260 from the external atmosphere. The transfer unit also may be constructed to protect the molten material from contamination by oxides that can result from the use of a conventional atomizing nozzle. The transfer unit 320 may also be used to meter the flow of the molten material 260 from the atomizing hearth 270 to the atomizing apparatus 310, as further explained below. Those having ordinary skill, upon considering the present description, will be able to provide various possible alternate designs for transfer units and associated equipment capable of controllably transferring molten material 260, maintained in a molten state, between an atomizing hearth and an atomizing apparatus as employed in embodiments of the present apparatuses and methods. All such transfer unit designs that may be incorporated into methods and apparatuses of the present invention are encompassed within the present disclosure.

According to certain embodiments, the transfer unit 320 includes an inlet 330 adjacent the atomizing hearth 270 and an outlet 340 adjacent the atomizing apparatus 310, and one or more electrically conductive coils 350 are positioned at the inlet 330. A source of electrical current (not shown) is in selective electrical connection with the conductive coils 350 to heat the molten material 260 and initiate the flow of at least a portion of the molten material 260 to the atomizing apparatus 310. According to certain embodiments, the electrically conductive coils 350 are adapted to heat the molten material 260 to a temperature in the range of the liquidus of the material up to 500°C above the liquidus.

According to certain embodiments, the transfer unit 320 includes a melt container 360 for receiving the molten material 260, and a transfer region of the transfer unit 320 is configured to include a passage 370 constructed to receive molten material 260 from the melt container 360. The wall of the passage 370 is defined by a number of fluid-cooled metallic segments. According to certain embodiments, the transfer unit 320 includes one or more electrically conductive coils 380 positioned at the outlet 340. The coils 380 are cooled by circulating a suitable coolant such as water or another heat-conducting fluid through conduits associated with the outlet 340. A portion of the molten material 260 contacts the cooled wall of the passage 370 of the transfer unit 320 and may solidify to form a skull that insulates the wall from contact with a remainder of the molten material 260. The cooling of the hearth wall and the formation of the skull assures that the melt is not contaminated by materials from which the inner walls of the transfer unit 320 are formed.

During the time that the molten material 260 is flowing from the melt container 360 of the transfer unit 320 through the passage 370, electrical current is passed through the conductive coils 380 at an intensity sufficient to inductively heat the molten material 260 and maintain it in molten form. The coils 380 serve as induction heating coils and adjustably heat the molten material 260 passing through the outlet 340 of the transfer unit 320. According to certain embodiments, the electrically conductive coils 380 are adapted to heat the molten material 260 to a temperature in the range of 50°C above the liquidus of the material up to 400°C above the liquidus. In further embodiments, the electrically conductive coils 380 are adapted to heat the molten material 260 to a temperature in the range of the liquidus temperature of the material up to 500°C above the liquidus. According to certain other embodiments, the electrically conductive coils 380 are adapted to selectively prevent passage of the molten material 260 to the atomizing apparatus 310.

According to certain embodiments, at least a portion of the molten material 260 passes to the atomizing apparatus 310 continually. In such embodiments, molten material 260 flows continually from the melting hearth 220 to the atomizing hearth 270, through the transfer unit 320, exits outlet 340 of the transfer unit 320, and passes into the atomizing apparatus 310. In certain embodiments, the flow of molten material 260 to the atomizing hearth 270 may be discontinuous, *i.e.,* with starts and stops. In various embodiments, molten material 260 flows from the melting hearth 220, through at least one additional hearth, and to the atomizing hearth 270, through the transfer unit 320, exits outlet 340 of the transfer unit 320, and passes into the atomizing apparatus 310. According to certain embodiments, the atomizing apparatus 310 comprises an atomizing nozzle including a plurality of plasma atomizing torches that converge at a point and form a droplet spray of the molten material 260. According to further embodiments, the atomizing nozzle includes three plasma torches that are equally distributed to define angles of about 120° between one another. In such embodiments, each of the plasma torches also may be positioned to form an angle of 30° with respect to the axis of the atomizing nozzle. According to certain embodiments, the atomizing apparatus 310 includes an atomizing nozzle that includes plasma jets generated by D.C. guns operating in the power range of 20 to 40 kW. According to certain embodiments, the atomizing apparatus 310 comprises an atomizing nozzle that forms at least one gas jet that disperses the molten material 260 to form the droplet spray.

The resulting droplet spray is directed into a collector 400. According to certain embodiments, a position of the collector 400 relative to the atomizing nozzle or other atomizing apparatus 310 is adjustable. The distance between the point of atomization and the collector 400 may control the solids fraction in the material deposited in the collector 400. Thus, as the material is deposited, the position of the collector 400 relative to the atomizing nozzle or other atomizing apparatus 310 may be adjusted so that the distance between the surface of the collected material in the collector 400 and the atomizing nozzle or other atomizing apparatus 310 is suitably maintained. According to certain embodiments, the collector 400 is selected from a chamber, a mold, and a rotating mandrel. For example, in certain embodiments, as the material is deposited into the collector 400, the collector 400 may rotate to better ensure uniform deposition of the droplets over a surface of the collector 400.

Although the foregoing description of the apparatus 200 refers to the melting hearth 220, the atomizing hearth 270, the atomizing apparatus 310, the transfer unit 320, and the collector 400 as relatively discrete units or components of the apparatus associated in series, it will be understood that the apparatus 200 need not be constructed in that way. Rather than being constructed of discrete, disconnectable melting (and/or melting/refining), transfer, atomizing, and collector units, an apparatus according to the present invention, such as apparatus 200, may incorporate elements or regions providing the essential features of each of those units, but without being capable of deconstruction into discrete and individually operable apparatuses or units. Thus, reference in the appended claims to a melting hearth, an atomizing hearth, an atomizing apparatus, a transfer unit, and a collector should not be construed to mean that such distinct units may be disassociated from the claimed apparatus without loss of operability.

In certain embodiments, a metallic powder material produced according to various embodiments of the methods, or by the various embodiments of apparatuses, disclosed herein comprises an average particle size of 10 to 150 microns. In certain embodiments, a metallic powder material produced according to various embodiments of the methods, or by the various embodiments of apparatuses, disclosed herein has a particle size distribution of 40 to 120 microns (*i.e.,* the particle size of substantially all the powder particles falls in the range of 40 to 120 microns). A metallic powder material having a particle size distribution of 40 to 120 microns is particularly useful in electron beam additive manufacturing applications. In certain embodiments, a metallic powder material produced according to various embodiments of the methods, or by the various embodiments of apparatuses, disclosed herein has a particle size distribution of 15 to 45 microns (*i.e.,* the particle size of substantially all the powder particles falls in the range of 15 to 45 microns). A metallic powder material having a particle size distribution of 15 to 45 microns is particularly useful in laser additive manufacturing applications. According to certain embodiments, the metallic powder material comprises spherical particles. In certain other embodiments, at least a portion of the metallic powder material has other geometric forms, including, but not limited to, flakes, chips, needles, and combinations thereof.

According to certain embodiments, the metallic powder material has a composition that cannot be readily produced by conventional ingot metallurgy, *e.g.,* melting and casting technologies. That is, the methods that have been described herein may be able to produce a metallic powder material with a composition that would either be too segregation-proneor have properties that prevent it from being cast by conventional ingot metallurgy. According to certain embodiments, a boron content of the metallic powder material is greater than 10 ppm, based on total powder material weight. In conventional ingot melting and casting, boron levels above 10 ppm can produce detrimental borides. In contrast, various embodiments of the methods described herein permit a metallic powder material having a boron content greater than 10 ppm to be produced without exhibiting unacceptable detrimental phases or properties. This expands the possibilities for compositions of metallic powder material that can be produced.

Metallic powder materials made according the methods and apparatuses of the present invention may have any composition suitably made using the present methods and apparatuses. According to certain embodiments, the metallic powder materials have the chemical composition of one of a commercially pure titanium, a titanium alloy (e.g., Ti-6AI-4V alloy, having a composition specified in UNS R56400), and a titanium aluminide alloy (e.g., Ti-48AI-2Nb-2Cralloy). According to another embodiment, the metallic powder materials have a chemical composition material comprising, by weight, about 4 percent vanadium, about 6 percent aluminum, and balance titanium and impurities. (All percentages herein are weight percentages, unless otherwise indicated.) According to yet another embodiment, the metallic powder materials have the chemical composition of one of a commercially pure nickel, a nickel alloy (e.g., Alloy 718, having a composition specified in UNS N07718), a commercially pure zirconium, a zirconium alloy (e.g., Zr 704 alloy, having a composition specified in UNS R60704), a commercially pure niobium, a niobium alloy (*e.g.,* ATI Nb1Zr™ alloy (Type 3 and Type 4), having a composition specified in UNS R04261), a commercially pure tantalum, a tantalum alloy (e.g., Tantalum-10% tungsten alloy, having a composition specified in UNS 20255), a commercially pure tungsten, and a tungsten alloy *(e.g.,* 90-7-3 tungsten alloy). It will be understood that the methods and apparatuses described herein are not limited to producing metallic powder materials having the foregoing chemical compositions. Instead, the starting materials may be selected so as to provide a metallic powder material having the desired chemical composition and other desired properties.

Metallic powder materials made according the present methods and/or using the present apparatuses may be made into metallic (*e.g*., metal and metal alloy) articles by hot isostatic pressing techniques and other suitable conventional techniques for forming articles from metallurgical powders. Such other suitable techniques will be readily apparent to those having ordinary skill upon considering the present invention.

Although the foregoing description has necessarily presented only a limited number of embodiments, those of ordinary skill in the relevant art will appreciate that various changes in the methods and apparatuses and other details of the examples that have been described and illustrated herein may be made by those skilled in the art, and all such modifications will remain within the principle and scope of the present invention as expressed herein and in the appended claims.

## Claims

1. A method of producing a metallic powder material, the method comprising:
supplying feed materials (240) to a melting hearth (100, 220);
melting the feed materials in the melting hearth with a heat source (230), thereby producing a molten material (260);
passing at least a portion of the molten material (260) from the melting hearth (100, 220) directly or indirectly to an atomizing hearth (270);
heating the molten material (260) in the atomizing hearth (270) with a second heat source (300);
passing at least a portion of the molten material (260) from the atomizing hearth (270) in a molten state through a transfer unit (320) to an atomizing nozzle; and
forming a droplet spray of the molten material (260) with the atomizing nozzle, whereafter at least a portion of the droplet spray is solidified to provide a metallic powder material which is received by a collector (400); and
wherein the transfer unit (320) is coupled to and is disconnectable from the atomizing hearth (270), the transfer unit (320) comprising:
an inlet (330) adjacent the atomizing hearth (270) and an outlet (340) adjacent the atomizing nozzle;
a melt container region (360) receiving molten material (260) from the atomizing hearth (270), wherein one or more electrically conductive coils (350) positioned at the inlet is adapted to selectively heat material within the melt container region; and
a passage (370) comprising fluidly cooled walls communicating with the melt container region (360) and the atomizing nozzle, wherein molten material (260) passes from the melt container region to the atomizing nozzle through the passage (370), and wherein one or more electrically conductive coils (350) is positioned at the outlet (340) and is adapted to selectively heat material within the passage.

2. The method of claim 1, where the at least a portion of the molten material passes from the melting hearth (270) through at least one additional hearth prior to entering the atomizing hearth.

3. The method of claim 1, wherein the first heat source (230) and the second heat source (300) each independently comprises at least one of a plasma torch, an electron beam generator, a heating device generating electrons, a laser, an electric arc device, and an induction coil.

4. The method of claim 1, wherein the molten material (260) is at least one of refined and homogenized prior to passing into the atomizing nozzle.

5. The method of claim 1, wherein the one or more electrically conductive coils (350) positioned at the inlet (330) is adapted to heat the molten material (260) to initiate passing the at least a portion of the molten material (260) from the atomizing hearth (270) to the atomizing nozzle through the transfer unit (320).

6. The method of claim 5, wherein the one or more electrically conductive coils (350) positioned at the inlet is adapted to heat the molten material (260) in a range of a liquidus of the material to 500°C above the liquidus.

7. The method of claim 1, wherein one or more electrically conductive coils (350) positioned at the outlet (340) is adapted to adjustably heat the molten material (260).

8. The method of claim 7, wherein the one or more electrically conductive coils (350) positioned at the outlet (340) is adapted to heat the molten material (260) in a range of a liquidus of the material to 500°C above the liquidus.

9. The method of claim 1, wherein the one or more electrically conductive coils (350) positioned at the outlet (340) is adapted to stop passage of the molten material (260) to the atomizing nozzle.

10. The method of claim 1, wherein the atomizing nozzle either includes a plurality of plasma atomizing torches forming plasma jets that converge at a point and form the droplet spray from the molten material, or forms at least one gas jet that disperses the molten material into the droplet spray.

11. The method of claim 1, wherein a composition of the metallic powder material is selected from commercially pure titanium, titanium alloys, titanium aluminide alloys, commercially pure nickel, nickel alloys, commercially pure zirconium, zirconium alloys, commercially pure niobium, niobium alloys, commercially pure tantalum, tantalum alloys, commercially pure tungsten, and tungsten alloys.

12. An apparatus (200) for producing a metallic powder material, the apparatus comprising:
a melting hearth (220)adapted to receive feed materials;
a first heat source (230) adapted to melt the feed materials to provide a molten material (260) in the melting hearth (220);
an atomizing hearth (270) disposed to directly or indirectly receive at least a portion of the molten material (260) from the melting hearth (220);
a second heat source (300) adapted to heat molten material (260) in the atomizing hearth (270);
an atomizing nozzle adapted to form a droplet spray from the molten material (260);
a collector (400) adapted to receive the droplet spray as a metallic powder material; and
a transfer unit (320) coupled to and disconnectable from the atomizing hearth, wherein molten material (260) passes from the atomizing hearth (270) to the atomizing nozzle in a molten state through the transfer unit, wherein the transfer unit comprises:
an inlet (330) adjacent the atomizing hearth (270) and an outlet (340) adjacent the atomizing nozzle;
a melt container region (360) adapted to receive molten material (260) from the atomizing hearth (270), wherein one or more electrically conductive coils (350) positioned at the inlet is adapted to selectively heat material within the melt container region (360); and
a passage (370) comprising fluidly cooled walls communicating with the melt container region and the atomizing nozzle, wherein molten material (260) passes from the melt container region (360) to the atomizing nozzle through the passage (370), and wherein one or more electrically conductive coils (350) positioned at the outlet (340) is adapted to selectively heat material within the passage (370) .

13. The apparatus of claim 12, wherein a first heat source is associated with the melting hearth and a second heat source is associated with the atomizing hearth (270), wherein the first heat source (230) and the second heat source(300) each independently comprises at least one of a plasma torch, an electron beam generator, a heating device generating electrons, a laser, an electric arc device, and an induction coil.

14. The apparatus of claim 12, wherein the one or more electrically conductive coils (350) positioned at the inlet (330) is adapted to heat the molten material (260) to initiate passing the at least a portion of the molten material (260) to the atomizing nozzle.

15. The apparatus of claim 14, wherein the one or more electrically conductive coils (350) positioned at the inlet is adapted to heat the molten material (260) in a range of a liquidus of the material to 500°C above the liquidus.

16. The apparatus of claim 12, wherein the one or more electrically conductive coils (350) positioned at the outlet (340) is adapted to adjustably heat the molten material (260).

17. The apparatus of claim 16, wherein the one or more electrically conductive coils (350) positioned at the outlet (340) is adapted to heat the molten material (260) in a range of a liquidus of the material to 500°C above the liquidus.

18. The apparatus of claim 16, wherein the one or more electrically conductive coils (350) positioned at the outlet (340) is adapted to stop passage of the molten material (260) to the atomizing nozzle.

19. The apparatus of claim 12, wherein the atomizing nozzle either includes a plurality of plasma atomizing torches forming plasma jets that converge at a point and form the droplet spray of the molten material, or forms at least one gas jet that disperses the molten material (260) into the droplet spray.

20. The apparatus of claim 12, wherein the collector (400) is selected from a chamber, a mold, and a rotating mandrel.

## Patentansprüche

1. Verfahren zur Herstellung eines metallischen Pulvermaterials, wobei das Verfahren Folgendes umfasst:
Zuführen von Beschickungsmaterialien (240) zu einem Schmelzherd (100, 220);
Schmelzen der Beschickungsmaterialien in dem Schmelzherd mit einer Wärmequelle (230), wodurch ein geschmolzenes Material (260) erzeugt wird;
Weiterleiten mindestens eines Teils des geschmolzenen Materials (260) vom Schmelzherd (100, 220) direkt oder indirekt zu einem Zerstäubungsherd (270);
Erhitzen des geschmolzenen Materials (260) im Zerstäubungsherd (270) mit einer zweiten Wärmequelle (300);
Weiterleiten mindestens eines Teils des geschmolzenen Materials (260) vom Zerstäubungsherd (270) in einem geschmolzenen Zustand durch eine Übertragungseinheit (320) zu einer Zerstäubungsdüse; und
Bilden eines Tröpfchensprays des geschmolzenen Materials (260) mit der Zerstäubungsdüse, wobei danach mindestens ein Teil des Tröpfchensprays verfestigt wird, um ein metallisches Pulvermaterial bereitzustellen, das von einem Kollektor (400) aufgenommen wird; und
wobei die Übertragungseinheit (320) mit dem Zerstäubungsherd (270) gekoppelt ist und von diesem trennbar ist, wobei die Übertragungseinheit (320) Folgendes umfasst:
einen Einlass (330) neben dem Zerstäubungsherd (270) und einen Auslass (340) neben der Zerstäubungsdüse;
einen Schmelzbehälterbereich (360), der das geschmolzene Material (260) von dem Zerstäubungsherd (270) aufnimmt, wobei eine oder mehrere elektrisch leitende Spulen (350), die am Einlass positioniert sind, angepasst sind, um das Material innerhalb des Schmelzbehälterbereichs selektiv zu erwärmen; und
einen Durchgang (370), der flüssigkeitsgekühlte Wände umfasst, die mit dem Schmelzbehälterbereich (360) und der Zerstäubungsdüse in Verbindung stehen, wobei das geschmolzene Material (260) vom Schmelzbehälterbereich durch den Durchgang (370) zur Zerstäubungsdüse gelangt und wobei eine oder mehrere elektrisch leitende Spulen (350) am Auslass (340) positioniert und so angepasst sind, dass sie das Material innerhalb des Durchgangs selektiv erwärmen.

2. Verfahren nach Anspruch 1, wobei der mindestens eine Teil des geschmolzenen Materials vom Schmelzherd (270) durch mindestens einen zusätzlichen Herd gelangt, bevor er in den Zerstäubungsherd eintritt.

3. Verfahren nach Anspruch 1, wobei die erste Wärmequelle (230) und die zweite Wärmequelle (300) jeweils unabhängig voneinander mindestens einen Plasmabrenner, einen Elektronenstrahlgenerator, eine elektronenerzeugende Heizvorrichtung, einen Laser, eine Lichtbogenvorrichtung und eine Induktionsspule umfassen.

4. Verfahren nach Anspruch 1, wobei das geschmolzene Material (260) vor dem Eintreten in die Zerstäubungsdüse raffiniert und/oder homogenisiert ist.

5. Verfahren nach Anspruch 1, wobei die eine oder mehreren elektrisch leitenden Spulen (350), die am Einlass (330) positioniert sind, angepasst sind, um das geschmolzene Material (260) zu erwärmen, um das Weiterleiten des mindestens einen Teils des geschmolzenen Materials (260) von dem Zerstäubungsherd (270) zur Zerstäubungsdüse durch die Übertragungseinheit (320) zu initiieren.

6. Verfahren nach Anspruch 5, wobei die eine oder mehreren am Einlass positionierten elektrisch leitenden Spulen (350) angepasst sind, um das geschmolzene Material (260) in einem Bereich eines Liquidus des Materials auf 500 °C über dem Liquidus zu erwärmen.

7. Verfahren nach Anspruch 1, wobei eine oder mehrere elektrisch leitende Spulen (350), die am Auslass (340) positioniert sind, angepasst sind, um das geschmolzene Material (260) einstellbar zu erwärmen.

8. Verfahren nach Anspruch 7, wobei die eine oder mehreren elektrisch leitenden Spulen (350), die am Auslass (340) positioniert sind, angepasst sind, um das geschmolzene Material (260) in einem Bereich eines Liquidus des Materials auf 500 °C über dem Liquidus zu erwärmen.

9. Verfahren nach Anspruch 1, wobei die eine oder mehreren elektrisch leitenden Spulen (350), die am Auslass (340) positioniert sind, angepasst sind, um das Durchgehen des geschmolzenen Materials (260) zur Zerstäubungsdüse zu stoppen.

10. Verfahren nach Anspruch 1, wobei die Zerstäubungsdüse entweder mehrere Plasmazerstäubungsbrenner enthält, die Plasmastrahlen bilden, die an einem Punkt konvergieren und das Tröpfchenspray aus dem geschmolzenen Material bilden, oder mindestens einen Gasstrahl bildet, der das geschmolzene Material dispergiert, um das Tröpfchenspray zu bilden.

11. Verfahren nach Anspruch 1, wobei eine Zusammensetzung des Metallpulvermaterials aus kommerziell reinem Titan, Titanlegierungen, Titanaluminidlegierungen, kommerziell reinem Nickel, Nickellegierungen, kommerziell reinem Zirkonium, Zirkoniumlegierungen, kommerziell reinem Niob, Nioblegierungen, kommerziell reinem Tantal, Tantallegierungen, kommerziell reinem Wolfram und Wolframlegierungen ausgewählt ist.

12. Vorrichtung (200) zur Herstellung eines metallischen Pulvermaterials, wobei die Vorrichtung Folgendes umfasst:
einen Schmelzherd (220), der angepasst ist, um die Beschickungsmaterialien aufzunehmen;
eine erste Wärmequelle (230), die angepasst ist, um die Beschickungsmaterialien zu schmelzen, um ein geschmolzenes Material (260) in dem Schmelzherd (220) bereitzustellen;
einen Zerstäubungsherd (270), der angeordnet ist, um direkt oder indirekt mindestens einen Teil des geschmolzenen Materials (260) vom Schmelzherd (220) aufzunehmen;
eine zweite Wärmequelle (300), die angepasst ist, um das geschmolzene Material (260) im Zerstäubungsherd (270) zu erhitzen;
eine Zerstäubungsdüse, die angepasst ist, um ein Tröpfchenspray aus dem geschmolzenen Material (260) zu bilden;
einen Kollektor (400), der angepasst ist, um das Tröpfchenspray als metallisches Pulvermaterial aufzunehmen; und
eine Übertragungseinheit (320), die mit dem Zerstäubungsherd gekoppelt und von diesem trennbar ist, wobei das geschmolzene Material (260) in einem geschmolzenen Zustand durch die Übertragungseinheit vom Zerstäubungsherd (270) zur Zerstäubungsdüse gelangt, wobei die Übertragungseinheit Folgendes umfasst:
einen Einlass (330) neben dem Zerstäubungsherd (270) und einen Auslass (340) neben der Zerstäubungsdüse;
einen Schmelzbehälterbereich (360), der angepasst ist, um das geschmolzene Material (260) von dem Zerstäubungsherd (270) aufzunehmen, wobei eine oder mehrere elektrisch leitende Spulen (350), die am Einlass positioniert sind, angepasst sind, um das Material innerhalb des Schmelzbehälterbereichs (360) selektiv zu erwärmen; und
einen Durchgang (370), der flüssigkeitsgekühlte Wände umfasst, die mit dem Schmelzbehälterbereich und der Zerstäubungsdüse in Verbindung stehen, wobei das geschmolzene Material (260) durch den Durchgang (370) vom Schmelzbehälterbereich (360) zur Zerstäubungsdüse gelangt und wobei eine oder mehrere elektrisch leitende Spulen (350), die am Auslass (340) positioniert sind, angepasst sind, um das Material innerhalb des Durchgangs (370) selektiv zu erwärmen.

13. Vorrichtung nach Anspruch 12, wobei eine erste Wärmequelle dem Schmelzherd zugeordnet ist und eine zweite Wärmequelle dem Zerstäubungsherd (270) zugeordnet ist, wobei die erste Wärmequelle (230) und die zweite Wärmequelle (300) jeweils unabhängig voneinander mindestens einen Plasmabrenner, einen Elektronenstrahlgenerator, eine elektronenerzeugende Heizvorrichtung, einen Laser, eine Lichtbogenvorrichtung und eine Induktionsspule umfassen.

14. Vorrichtung nach Anspruch 12, wobei die eine oder mehreren am Einlass (330) angeordneten elektrisch leitenden Spulen (350) angepasst sind, um das geschmolzene Material (260) zu erwärmen, um das Weiterleiten des mindestens einen Teils des geschmolzenen Materials (260) zu der Zerstäubungsdüse zu initiieren.

15. Vorrichtung nach Anspruch 14, wobei die eine oder mehreren elektrisch leitenden Spulen (350), die am Einlass positioniert sind, angepasst sind, um das geschmolzene Material (260) in einem Bereich eines Liquidus des Materials auf 500 °C über dem Liquidus zu erwärmen.

16. Vorrichtung nach Anspruch 12, wobei die eine oder mehreren elektrisch leitenden Spulen (350), die am Auslass (340) positioniert sind, angepasst sind, um das geschmolzene Material (260) einstellbar zu erwärmen.

17. Vorrichtung nach Anspruch 16, wobei die eine oder mehreren elektrisch leitenden Spulen (350), die am Auslass (340) positioniert sind, angepasst sind, um das geschmolzene Material (260) in einem Bereich eines Liquidus des Materials auf 500 °C über dem Liquidus zu erwärmen.

18. Vorrichtung nach Anspruch 16, wobei die eine oder mehreren elektrisch leitenden Spulen (350), die am Auslass (340) positioniert sind, angepasst sind, um das Durchgehen des geschmolzenen Materials (260) zur Zerstäubungsdüse zu stoppen.

19. Vorrichtung nach Anspruch 12, wobei die Zerstäubungsdüse entweder mehrere Plasmazerstäubungsbrenner enthält, die Plasmastrahlen bilden, die an einem Punkt konvergieren und das Tröpfchenspray des geschmolzenen Materials bilden, oder mindestens einen Gasstrahl bildet, der das geschmolzene Material (260) dispergiert, um das Tröpfchenspray zu bilden.

20. Vorrichtung nach Anspruch 12, wobei der Kollektor (400) aus einer Kammer, einer Form und einem rotierenden Dorn ausgewählt ist.

## Revendications

1. Procédé de fabrication d'un matériau métallique en poudre, le procédé comprenant :
la fourniture des matériaux d'alimentation (240) à un creuset de fusion (100, 220) ;
la fusion des matériaux d'alimentation dans le creuset de fusion à l'aide d'une source de chaleur (230), produisant ainsi un matériau fondu (260) ;
le passage d'au moins une partie du matériau fondu (260) depuis le creuset de fusion (100, 220) directement ou indirectement vers un creuset d'atomisation (270) ;
le chauffage du matériau fondu (260) dans le creuset d'atomisation (270) à l'aide d'une seconde source de chaleur (300) ;
le passage d'au moins une partie du matériau fondu (260) depuis le creuset d'atomisation (270) dans un état fondu à travers une unité de transfert (320) vers une buse d'atomisation ; et
la formation d'une pulvérisation de gouttelettes du matériau fondu (260) à l'aide de la buse d'atomisation, après quoi au moins une partie de la pulvérisation de gouttelettes est solidifiée pour fournir un matériau métallique en poudre qui est reçu par un collecteur (400) ; et
dans lequel l'unité de transfert (320) est accouplée et peut être déconnectée du creuset d'atomisation (270), l'unité de transfert (320) comprenant :
une entrée (330) adjacente au creuset d'atomisation (270) et une sortie (340) adjacente à la buse d'atomisation ;
une région du contenant de fusion (360) recevant la matériau fondu (260) provenant du creuset d'atomisation (270), dans lequel une ou plusieurs bobines électriquement conductrices (350) positionnées à l'entrée sont adaptées pour chauffer sélectivement la matériau à l'intérieur de la région du contenant de fusion ; et
un passage (370) comprenant des parois refroidies par fluide communiquant avec la région du contenant de fusion (360) et la buse d'atomisation, dans lequel le matériau fondu (260) passe de la région du contenant de fusion à la buse d'atomisation à travers le passage (370) et dans lequel une ou plusieurs bobines électriquement conductrices (350) sont positionnées à la sortie (340) et sont adaptées pour chauffer sélectivement le matériau à l'intérieur du passage.

2. Procédé selon la revendication 1, où ladite au moins une partie du matériau fondu passe depuis le creuset de fusion (270) à travers au moins un creuset supplémentaire avant d'entrer dans le creuset d'atomisation.

3. Procédé selon la revendication 1, selon lequel la première source de chaleur (230) et la seconde source de chaleur (300) comprennent chacune indépendamment au moins un dispositif parmi une torche à plasma, un générateur de faisceau d'électrons, un dispositif de chauffage générant des électrons, un laser, un dispositif à arc électrique et une bobine d'induction.

4. Procédé selon la revendication 1, selon lequel le matériau fondu (260) est au moins purifié et/ou homogénéisé avant de passer dans la buse d'atomisation.

5. Procédé selon la revendication 1, selon lequel la ou les bobines électriquement conductrices (350) positionnées à l'entrée (330) sont adaptées pour chauffer le matériau fondu (260) pour amorcer le passage de ladite au moins une partie du matériau fondu (260) depuis le creuset d'atomisation (270) vers la buse d'atomisation à travers l'unité de transfert (320).

6. Procédé selon la revendication 5, selon lequel la ou les bobines électriquement conductrices (350) positionnées à l'entrée sont adaptées pour chauffer le matériau fondu (260) dans une plage d'un liquidus du matériau à une température supérieure de 500 °C au liquidus.

7. Procédé selon la revendication 1, selon lequel une ou plusieurs bobines électriquement conductrices (350) positionnées à la sortie (340) sont adaptées pour chauffer de manière réglable le matériau fondu (260).

8. Procédé selon la revendication 7, selon lequel la ou les bobines électriquement conductrices (350) positionnées à la sortie (340) sont adaptées pour chauffer le matériau fondu (260) dans une plage d'un liquidus du matériau à une température supérieure de 500 °C au liquidus.

9. Procédé selon la revendication 1, selon lequel la ou les bobines électriquement conductrices (350) positionnées à la sortie (340) sont adaptées pour arrêter le passage du matériau fondu (260) vers la buse d'atomisation.

10. Procédé selon la revendication 1, selon lequel la buse d'atomisation soit comprend une pluralité de torches d'atomisation à plasma formant des jets de plasma qui convergent en un point et forment la pulvérisation de gouttelettes à partir du matériau fondu, soit forme au moins un jet de gaz qui disperse le matériau fondu dans la pulvérisation de gouttelettes.

11. Procédé selon la revendication 1, selon lequel une composition du matériau métallique en poudre est choisie parmi le titane commercialement pur, les alliages de titane, les alliages d'aluminure de titane, le nickel commercialement pur, les alliages de nickel, le zirconium commercialement pur, les alliages de zirconium, le niobium commercialement pur, les alliages de niobium, le tantale commercialement pur, les alliages de tantale, le tungstène commercialement pur et les alliages de tungstène.

12. Appareil (200) destiné à produire un matériau métallique en poudre, l'appareil comprenant :
un creuset de fusion (220) adapté pour recevoir des matériaux d'alimentation ;
une première source de chaleur (230) adaptée pour fondre les matériaux d'alimentation pour fournir un matériau fondu (260) dans le creuset de fusion (220) ;
un creuset d'atomisation (270) disposé de sorte à recevoir directement ou indirectement au moins une partie du matériau fondu (260) provenant du creuset de fusion (220) ;
une seconde source de chaleur (300) adaptée pour chauffer le matériau fondu (260) dans le creuset d'atomisation (270) ;
une buse d'atomisation adaptée pour former une pulvérisation de gouttelettes à partir du matériau fondu (260) ;
un collecteur (400) adapté pour recevoir la pulvérisation de gouttelettes sous la forme d'un matériau métallique en poudre ; et
une unité de transfert (320) accouplée au creuset d'atomisation et pouvant être déconnectée de celui-ci, dans lequel le matériau fondu (260) passe du creuset d'atomisation (270) à la buse d'atomisation dans un état fondu à travers l'unité de transfert, dans lequel l'unité de transfert comprend :
une entrée (330) adjacente au creuset d'atomisation (270) et une sortie (340) adjacente à la buse d'atomisation ;
une région du contenant de fusion (360) adaptée pour recevoir le matériau fondu (260) provenant du creuset d'atomisation (270), dans lequel une ou plusieurs bobines électriquement conductrices (350) positionnées à l'entrée sont adaptées pour chauffer sélectivement le matériau à l'intérieur de la région du contenant de fusion (360) ; et
un passage (370) comprenant des parois refroidies par fluide communiquant avec la région du contenant de fusion et la buse d'atomisation, dans lequel le matériau fondu (260) passe de la région du contenant de fusion (360) à la buse d'atomisation à travers le passage (370) et dans lequel une ou plusieurs bobines électriquement conductrices (350) positionnées à la sortie (340) sont adaptées pour chauffer sélectivement le matériau à l'intérieur du passage (370).

13. Appareil selon la revendication 12, dans lequel une première source de chaleur est associée au creuset de fusion et une seconde source de chaleur est associée au creuset d'atomisation (270), dans lequel la première source de chaleur (230) et la seconde source de chaleur (300) chacune comprend indépendamment au moins un dispositif parmi une torche à plasma, un générateur de faisceau d'électrons, un dispositif de chauffage générant des électrons, un laser, un dispositif à arc électrique et une bobine d'induction.

14. Appareil selon la revendication 12, dans lequel la ou les bobines électriquement conductrices (350) positionnées à l'entrée (330) sont adaptées pour chauffer le matériau fondu (260) pour amorcer le passage de ladite au moins une partie du matériau fondu (260) vers la buse d'atomisation.

15. Appareil selon la revendication 14, dans lequel la ou les bobines électriquement conductrices (350) positionnées à l'entrée sont adaptées pour chauffer le matériau fondu (260) dans une plage d'un liquidus du matériau à une température supérieure de 500 °C au liquidus.

16. Appareil selon la revendication 12, dans lequel la ou les bobines électriquement conductrices (350) positionnées à la sortie (340) sont adaptées pour chauffer de manière réglable le matériau fondu (260).

17. Appareil selon la revendication 16, dans lequel la ou les bobines électriquement conductrices (350) positionnées à la sortie (340) sont adaptées pour chauffer le matériau fondu (260) dans une plage d'un liquidus du matériau à une température supérieure de 500 °C au liquidus.

18. Appareil selon la revendication 16, dans lequel la ou les bobines électriquement conductrices (350) positionnées à la sortie (340) sont adaptées pour arrêter le passage du matériau fondu (260) vers la buse d'atomisation.

19. Appareil selon la revendication 12, dans lequel la buse d'atomisation soit comprend une pluralité de torches d'atomisation à plasma formant des jets de plasma qui convergent en un point et forment la pulvérisation de gouttelettes du matériau fondu, soit forme au moins un jet de gaz qui disperse le matériau fondu (260) dans la pulvérisation de gouttelettes.

20. Appareil selon la revendication 12, dans lequel le collecteur (400) est choisi parmi une chambre, un moule et un mandrin rotatif.
